# EUROPEAN PATENT APPLICATION

(11) **EP 4 538 171 A1**
(43) Date of publication of application: **16.04.2025**
(21) Application number: 24205686.9
(22) Date of filing: 09.10.2024
(51) Int. Cl.: B64C 1/14, B64D 45/00

(54) **COCKPIT SECONDARY BARRIER**

(30) Priority: 09.10.2023 US 202318483445
(71) Applicant: B/E Aerospace, Inc., Winston-Salem, NC 27105 (US)
(72) Inventor: MOE, Daniel N., Mukilteo, 98275 (US); RAYBELL, Shawn W., Maple Valley, 98038 (US)
(74) Representative: Dehns

(57) **Abstract**

A secondary cockpit barrier is disclosed herein. The secondary cockpit barrier includes a cylindrical cartridge (202) having an outer wall and an interior compartment, an internal roller bar disposed in the interior compartment of the cylindrical cartridge, a receiver stanchion (208) including a plurality of guide holes (220), a vertical bar (206) configured to engage the receiver stanchion, a barrier (204) having a first edge coupled to the internal roller bar and a second edge coupled to the vertical bar, the barrier configured to extend through an opening in the cylindrical cartridge and from the cylindrical cartridge to the receiver stanchion, a plurality of latch guides (222) coupled to the vertical bar, each of the plurality of latch guides configured to engage a guide hole of the plurality of guide holes, and a lock (210) coupled to the receiver stanchion, the lock configured to secure the barrier in a deployed position.

## Description

### FIELD

The present disclosure generally relates security features for an aircraft, and more particularly, to a secondary cockpit barrier.

### BACKGROUND

Commercial airlines and aircraft manufacturers continue to look for ways to improve security the aircraft. Security of the cockpit and the cockpit door continues to be a security concern as attempts to access the cockpit of aircraft while in flight continue. Pilots need to leave the cockpit during some flights to use the lavatory or for other business. Airlines and staff have implemented procedures in an attempt to improve the security of the cockpit. Some procedures include blocking access to the cockpit with a galley cart and a flight attendant during times when the cockpit door is open.

### SUMMARY

A secondary cockpit barrier is disclosed herein. The secondary cockpit barrier including a cylindrical cartridge having an outer wall and an interior compartment, an opening formed through the outer wall of the cylindrical cartridge, an internal roller bar disposed in the interior compartment of the cylindrical cartridge, a receiver stanchion including a plurality of guide holes, a vertical bar configured to engage the receiver stanchion, a barrier having a first edge coupled to the internal roller bar and a second edge coupled to the vertical bar, the barrier configured to extend through the opening from the cylindrical cartridge to the receiver stanchion, a plurality of latch guides extending from a surface of the vertical bar, each of the plurality of latch guides configured to engage a guide hole of the plurality of guide holes, and a lock coupled to the receiver stanchion, the lock configured to engage the plurality of latch guides to secure the barrier in a deployed position.

In various embodiments, the barrier includes at least one of a wire, a synthetic cord, or an aramid fiber woven into a semi-transparent mesh. In various embodiments, the internal roller bar is configured to rotate in a first direction to extend the barrier and to rotate in a second direction opposite the first direction to retract the barrier. In various embodiments, the secondary cockpit barrier further includes an internal spring coupled to the internal roller bar and configured to apply a force to rotate the internal roller bar in the second direction. In various embodiments, the secondary cockpit barrier further includes a wall anchor coupled to the cylindrical cartridge and configured to be secured to an exterior surface of a wall by a fastener. In various embodiments, the opening extends a height of the cylindrical cartridge and the barrier extends the height of the cylindrical cartridge.

Also disclosed herein is a cockpit barrier system including a first monument adjacent a cockpit door, a second monument adjacent the first monument, an aisle extending to the cockpit door and passing between the first monument and the second monument, a secondary cockpit barrier, including a cylindrical cartridge coupled to the first monument, the cylindrical cartridge having an outer wall and an interior compartment, an internal roller bar disposed in the interior compartment of the cylindrical cartridge, a receiver stanchion coupled to the second monument across the aisle from the first monument, a vertical bar configured to engage the receiver stanchion, a barrier having a first edge coupled to the internal roller bar and a second edge coupled to the vertical bar, the barrier configured to extend from the cylindrical cartridge to the receiver stanchion, and a lock coupled to the receiver stanchion and configured to secure the vertical bar to the receiver stanchion.

In various embodiments, the secondary cockpit barrier further includes a plurality of guide holes formed in the receiver stanchion and a plurality of latch guides extending from a surface of the vertical bar, each of the plurality of latch guides configured to engage a guide hole of the plurality of guide holes. In various embodiments, the barrier includes at least one of a wire, a synthetic cord, or an aramid fiber woven into a semi-transparent mesh. In various embodiments, the internal roller bar is configured to rotate in a first direction to extend the barrier and to rotate in a second direction opposite the first direction to retract the barrier. In various embodiments, the secondary cockpit barrier further includes an internal spring coupled to the internal roller bar and configured to apply a force to rotate the internal roller bar in the second direction.

In various embodiments, the cylindrical cartridge is coupled to an exterior surface of a wall of the first monument and wherein the receiver stanchion is coupled to an exterior surface of a wall of the second monument. In various embodiments, the cylindrical cartridge is integral with the first monument and the receiver stanchion is integral with the second monument. In various embodiments, the secondary cockpit barrier further includes an isolator mount disposed between the cylindrical cartridge and the first monument.

Also disclosed herein is an aircraft monument including a first wall, a cylindrical cartridge coupled to the first wall, the cylindrical cartridge having an outer wall and an interior compartment, an internal roller bar disposed in the interior compartment of the cylindrical cartridge, a receiver stanchion, a vertical bar configured to engage the receiver stanchion, a barrier having a first edge coupled to the internal roller bar and a second edge coupled to the vertical bar, the barrier configured to extend from the cylindrical cartridge to the receiver stanchion, and a lock coupled to the receiver stanchion and configured to secure the vertical bar to the receiver stanchion.

In various embodiments, the cylindrical cartridge is integral with the first wall. In various embodiments, the cylindrical cartridge is coupled to an exterior surface of the first wall. In various embodiments, the barrier includes at least one of a wire, a synthetic cord, or an aramid fiber woven into a semi-transparent mesh. In various embodiments, the internal roller bar is configured to rotate in a first direction to extend the barrier and to rotate in a second direction opposite the first direction to retract the barrier. In various embodiments, the aircraft monument further including an internal spring coupled to the internal roller bar and configured to apply a force to rotate the internal roller bar in the second direction.

The foregoing features and elements may be combined in any combination, without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIGS. 1A and 1B illustrate an aircraft and various sections within the aircraft, in accordance with various embodiments.
FIGS. 2A, 2B, and 2C illustrate a secondary cockpit barrier in a fully deployed position, in accordance with various embodiments.
FIGS. 3A, 3B, and 3C illustrate a secondary cockpit barrier in a partially deployed position, in accordance with various embodiments.
FIGS. 4A, 4B, and 4C illustrate a secondary cockpit barrier in a stowed position, in accordance with various embodiments.
FIGS. 5A, 5B, and 5C illustrate various features of a secondary cockpit barrier, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the invention as defined by the claims. Thus, the detailed description herein is presented for purposes of illustration only and not of limitation. While these exemplary embodiments are described in sufficient detail to enable those skilled in the art to practice the invention, it should be understood that other embodiments may be realized and that logical, chemical and mechanical changes may be made without departing from the spirit and scope of the invention. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

Disclosed herein is a secondary cockpit barrier. In various embodiments, the secondary cockpit barrier includes a bolt-on cartridge that contains a mesh barrier on a spring-loaded spool. In various embodiments, the mesh barrier includes an optimized blend of aramid fiber, small diameter wire rope, nylon webbing, and/or nylon paracord. In various embodiments, a vertical bar coupled to a free end of the mesh barrier plugs into a receiver stanchion. In various embodiments, bolt-on cartridge may be coupled to a first wall and the receiver stanchion may be coupled to a second wall across an aisle from the bolt-on cartridge. In various embodiments, the secondary cockpit barrier may be quickly deployed and quickly stowed while providing a threat deterrence and improved crew safety.

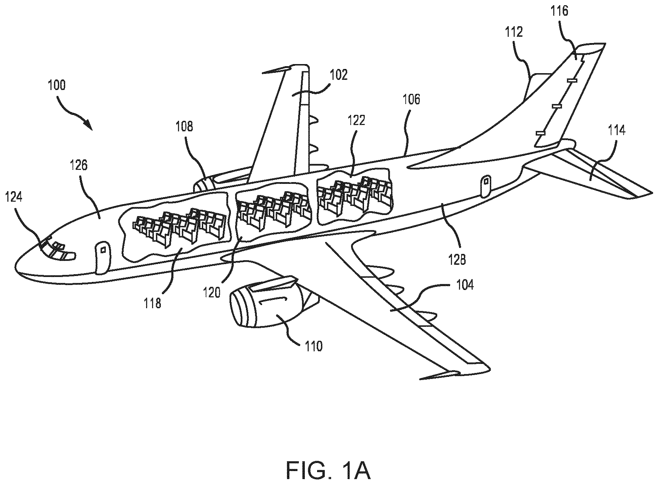

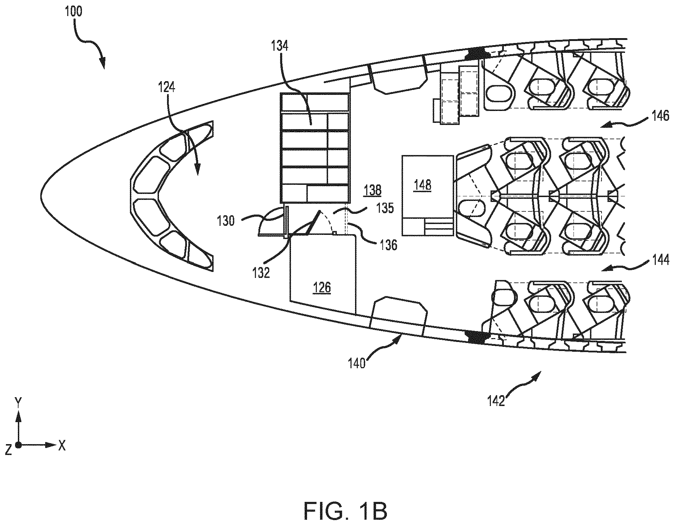

Referring now to FIGS. 1A and 1B, an aircraft 100 including various sections within the aircraft is illustrated, in accordance with various embodiments. Aircraft 100 is an example of a passenger or transport vehicle in which smart air ionizers may be implemented in accordance with various embodiments. In various embodiments, aircraft 100 has a starboard wing 102 and a port wing 104 attached to a fuselage 106. In various embodiments, aircraft 100 also includes a starboard engine 108 connected to starboard wing 102 and a port engine 110 connected to port wing 104. In various embodiments, aircraft 100 also includes a starboard horizontal stabilizer 112, a port horizontal stabilizer 114, and a vertical stabilizer 116. In various embodiments, aircraft 100 also includes various cabin sections, including, for example, a first cabin section 118, a second cabin section 120, a third cabin section 122, and a pilot cabin 124. In various embodiments, cabin sections 118, 120, 122 may include a plurality of passenger seats and a plurality of passenger service units disposed over the plurality of passenger seats. In various embodiments, aircraft 100 may include a front lavatory 126 and/or a rear lavatory 128.

Aircraft 100 further includes a cockpit door 130, a lavatory door 132, a galley 134, an aisle 135, a secondary cockpit barrier 136, a galley aisle 138, an exit door 140, a plurality of passenger seats 142, a first passenger aisle 144, and a second passenger aisle 146. Cockpit door 130 provides access to pilot cabin 124. Lavatory door 132 provides access to front lavatory 126. Galley 134 is disposed adjacent to and separate from front lavatory 126 by aisle 135. Secondary cockpit barrier 136 is configured to extend across aisle 135 to secure aisle 135, lavatory door 132, and cockpit door 130 by extending from galley 134 to front lavatory 126. In various embodiments, front lavatory 126 and/or galley 134 may be different monuments that are used in aircraft 100. In various embodiments, secondary barrier may alternatively extend across galley aisle 138 from galley 134 to a monument 148.

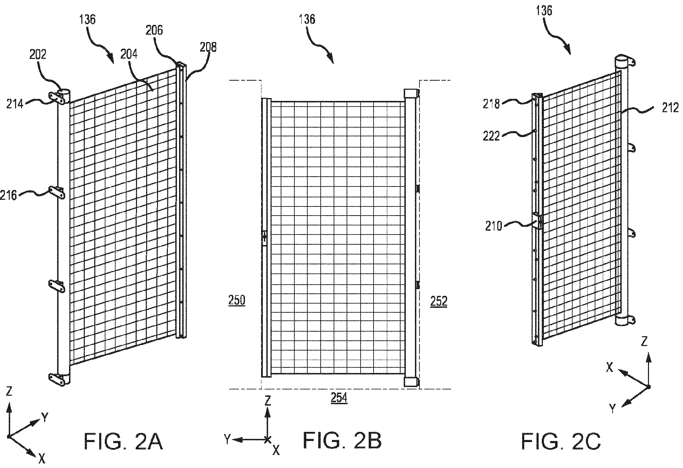

FIGS. 2A-2C, illustrate secondary cockpit barrier 136 in a fully deployed position, in accordance with various embodiments. FIG. 2A is a perspective view of secondary cockpit barrier 136 from the aft of aircraft 100 (i.e., from the passenger side) (e.g., from the positive x-direction looking toward the negative x-direction). FIG. 2B is a view of secondary cockpit barrier 136 as seen from cockpit door 130 (e.g., from the negative x-direction looking toward the positive x-direction). FIG. 2C is a perspective view of secondary cockpit barrier 136 from cockpit door 130 (e.g., from the negative x-direction looking toward the positive x-direction).

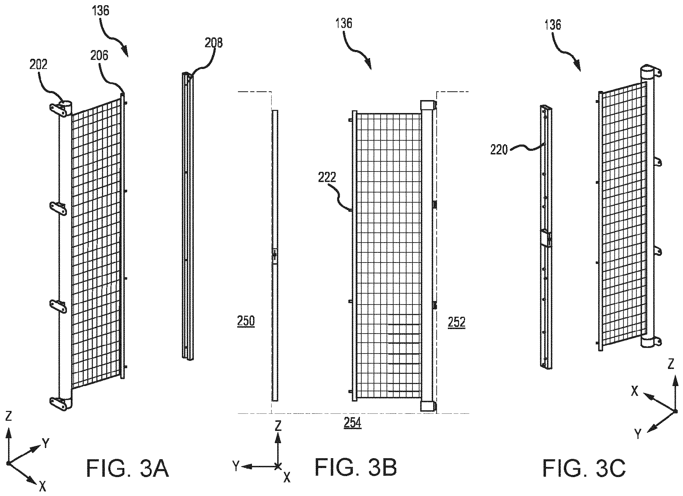

FIGS. 3A-3C, illustrate secondary cockpit barrier 136 in a partially deployed position, in accordance with various embodiments. FIG. 3A is a perspective view of secondary cockpit barrier 136 from the aft of aircraft 100 (i.e., from the passenger side) (e.g., from the positive x-direction looking toward the negative x-direction). FIG. 3B is a view of secondary cockpit barrier 136 as seen from cockpit door 130 (e.g., from the negative x-direction looking toward the positive x-direction). FIG. 3C is a perspective view of secondary cockpit barrier 136 from cockpit door 130 (e.g., from the negative x-direction looking toward the positive x-direction).

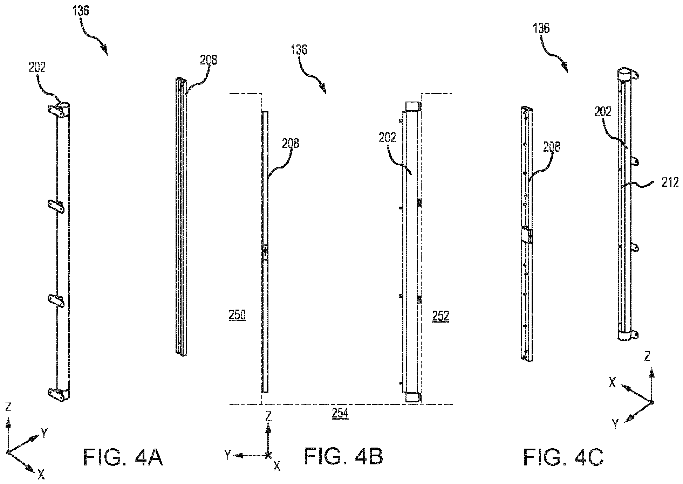

FIGS. 4A-4C, illustrate secondary cockpit barrier 136 in a stowed position, in accordance with various embodiments. FIG. 4A is a perspective view of secondary cockpit barrier 136 from the aft of aircraft 100 (i.e., from the passenger side) (e.g., from the positive x-direction looking toward the negative x-direction). FIG. 4B is a view of secondary cockpit barrier 136 as seen from cockpit door 130 (e.g., from the negative x-direction looking toward the positive x-direction). FIG. 4C is a perspective view of secondary cockpit barrier 136 from cockpit door 130 (e.g., from the negative x-direction looking toward the positive x-direction).

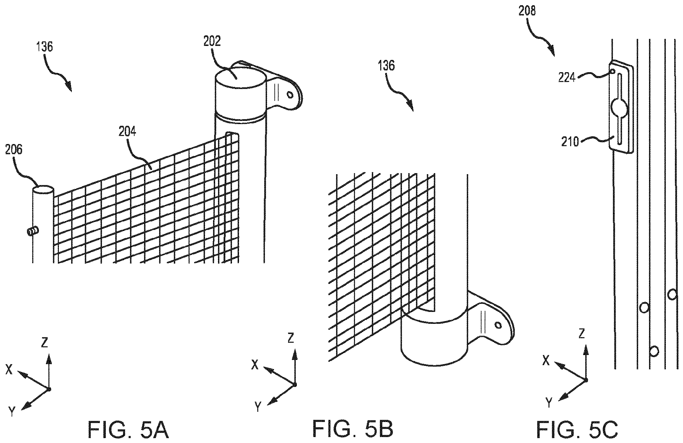

FIGS. 5A-5C, illustrate various features of secondary cockpit barrier 136 in more detail, in accordance with various embodiments. FIG. 5A is a perspective view of an upper portion of secondary cockpit barrier 136 (e.g., in the positive z-direction). FIG. 5B is a perspective view of a lower portion of secondary cockpit barrier 136 (e.g., in the negative z-direction). FIG. 2C is a perspective view of receiver stanchion 208.

Secondary cockpit barrier includes a cartridge 202, a barrier 204, a vertical bar 206, a receiver stanchion 208, and a lock 210. Cartridge 202 includes an opening 212, a plurality of wall anchors 214, and one or more mounting holes 216 formed in wall anchors 214. Receiver stanchion 208 includes a plurality of mounting holes 218 and a plurality of guide holes 220. Vertical bar 206 includes plurality of latch guides 222 that are configured to interface with the plurality of guide holes 220 when secondary cockpit barrier 136 is in the fully deployed position.

Further illustrated are a first monument 250, a second monument 252, and an aisle 254, or cabin floor, between first monument 250 and second monument 252. As illustrated, cartridge 202 is coupled to second monument 252 and receiver stanchion is coupled to first monument 250. Other configurations are possible and contemplated. In various embodiments, first monument and/or second monument 252 may any wall, partition, or monument used in aircraft 100, such as for example, front lavatory 126, rear lavatory 128, or galley 134. Reference will be made to first monument 250, second monument 252, and aisle 254 for ease of discussion. Such references are not intended to be limited but to be illustrative examples.

In various embodiments, cartridge 202 is cylindrical in shape. In various embodiments, cartridge 202 includes an internal roller tube that is secured to a first edge of barrier 204 and is configured to store barrier 204 when barrier 204 is in the stowed position. During deployment, barrier 204 unrolls from the internal roller tube, passes through opening 212, and to extend across aisle 254 to receiver stanchion 208. In various embodiments, cartridge 202 further includes an internal spring that is coupled to the internal roller tube. The internal spring may provide a retracting force to the internal roller tube, causing barrier 204 to be retracted into cartridge 202 into the stowed position. In various embodiments, the internal spring may also provide a dampening force to reduce an impact force on barrier 204. In various embodiments, the internal roller tube is configured to lock, preventing rotation, when barrier 204 is in the fully deployed position. Locking the internal roller tube tends to prevent movement of barrier 204 in response to an applied force (e.g., a person running into barrier 204). In various embodiments, the internal roller tube may include a lock that is configured to secure the roller tube in the deployed position and prevent further extension of barrier 204. In various embodiments, the lock may include a spring plunger configured to lock the roller tube in the deployed position. In various embodiments, the lock may include a ratchet mechanism configured to allow rotation of the internal roller tube in one direction and prevent rotation of the internal roller tube in an opposite direction.

In the illustrated embodiments, cartridge 202 is configured to be mounted to an external surface of a monument, a door, or wall, among others. In various embodiments, cartridge 202 may be integrated into the wall, the monument, or the door, among others. Similarly, receiver stanchion 208 may be integrated into a wall, a monument, or a door, among others. This provides flexibility to discretely install secondary cockpit barrier 136 in a new aircraft or a new monument as well as to install secondary cockpit barrier 136 as part of a retrofit. In various embodiments, secondary cockpit barrier 136 may further include isolation mounts disposed between cartridge 202 and second monument 252, for example. The isolation mounts may tend to reduce the force of an impact on cartridge 202 and the wall or monument to which it is attached. In various embodiments, the isolation mounts may include energy absorbent material such as rubber, gel, or nylon, among others.

Secondary cockpit barrier 136 may automatically lock in the fully deployed position, in various embodiments. In other words, lock 210 may automatically engage in response to receiver stanchion 208 receiving vertical bar 206. More specifically, lock 210 may automatically engage in response to the plurality of latch guides 222 engaging the plurality of guide holes 220. In various embodiments, lock 210 may be spring-loaded so that the spring is triggered in response to being engaging vertical bar 206 to engage lock 210. In various embodiments, lock 210 may include a light emitting diode (LED) indicator 224 that indicates the status of lock 210. LED indicator 224 may turn green in response to lock 210 engaging. LED indicator 224 may turn red in response to lock 210 failing to engage or in response to lock 210 disengaging. In various embodiments, lock 210 may include a slot facing cockpit door 130 (e.g., in the negative x-direction) that is configured to receive a card (e.g., a badge, credit card, etc.) and a mechanical release to open lock 210. Lock 210 may be configured to disengage, or open, in response to the card being inserted into the slot to engage the mechanical release. In various embodiments, lock 210 may include a mechanical override configured to receive a cylinder (e.g., screwdriver, rod, etc.) in a middle portion of the slot to engage the mechanical release. In various embodiments, secondary cockpit barrier 136 may include a second lock to prevent deployment of barrier 204. In various embodiments, the second lock may be similar to lock 210.

In various embodiments, barrier 204 may include a semi-transparent mesh material. This provides attendants visibility of the cabin and passengers when deployed. In various embodiments, barrier 204 may include cut and impact resistant materials. In various embodiments, barrier 204 may include at least one of an aramid fiber (e.g., Kevlar^{®}), a small diameter wire rope, a nylon webbing, or a nylon paracord, among others. The materials of barrier 204 may be woven into a mesh of any size sufficient to stop an impact force while allowing visibility through the mesh.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, Band C may be present in a single embodiment; for example, A and B, A and C, B and C, or A and B and C. Different cross-hatching is used throughout the figures to denote different parts but not necessarily to denote the same or different materials.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 5% of a stated value. Additionally, the terms "substantially," "about" or "approximately" as used herein represent an amount close to the stated amount that still performs a desired function or achieves a desired result. For example, the term "substantially," "about" or "approximately" may refer to an amount that is within 5% of a stated amount or value.

As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above-described concepts can be used alone or in combination with any or all of the other above-described concepts. Although various embodiments have been disclosed and described, one of ordinary skill in this art would recognize that certain modifications would come within the scope of this invention as defgined by the claims.

## Claims

1. A secondary cockpit barrier, comprising:
a cylindrical cartridge (202) having an outer wall and an interior compartment;
an opening (212) formed through the outer wall of the cylindrical cartridge;
an internal roller bar disposed in the interior compartment of the cylindrical cartridge;
a receiver stanchion (208) including a plurality of guide holes (220);
a vertical bar (206) configured to engage the receiver stanchion;
a barrier (204) having a first edge coupled to the internal roller bar and a second edge coupled to the vertical bar, the barrier configured to extend through the opening from the cylindrical cartridge to the receiver stanchion;
a plurality of latch guides (222) extending from a surface of the vertical bar, each of the plurality of latch guides configured to engage a guide hole of the plurality of guide holes; and
a lock (210) coupled to the receiver stanchion, the lock configured to engage the plurality of latch guides to secure the barrier in a deployed position.

2. The secondary cockpit barrier of claim 1, wherein the barrier includes at least one of a wire, a synthetic cord, or an aramid fiber woven into a semi-transparent mesh.

3. The secondary cockpit barrier of claim 1 or 2, wherein the internal roller bar is configured to rotate in a first direction to extend the barrier and to rotate in a second direction opposite the first direction to retract the barrier.

4. The secondary cockpit barrier of claim 3, further comprising:
an internal spring coupled to the internal roller bar and configured to apply a force to rotate the internal roller bar in the second direction.

5. The secondary cockpit barrier of any preceding claim, further comprising:
a wall anchor (214) coupled to the cylindrical cartridge and configured to be secured to an exterior surface of a wall by a fastener.

6. The secondary cockpit barrier of any preceding claim, wherein the opening extends a height of the cylindrical cartridge and the barrier extends the height of the cylindrical cartridge.

7. A cockpit barrier system, comprising:
a first monument (250) adjacent a cockpit door;
a second monument (252) adjacent the first monument;
an aisle (254) extending to the cockpit door and passing between the first monument and the second monument;
a secondary cockpit barrier, including:
a cylindrical cartridge (202) coupled to the first monument, the cylindrical cartridge having an outer wall and an interior compartment;
an internal roller bar disposed in the interior compartment of the cylindrical cartridge;
a receiver stanchion (208) coupled to the second monument across the aisle from the first monument;
a vertical bar (206) configured to engage the receiver stanchion;
a barrier (204) having a first edge coupled to the internal roller bar and a second edge coupled to the vertical bar, the barrier configured to extend from the cylindrical cartridge to the receiver stanchion; and
a lock (210) coupled to the receiver stanchion and configured to secure the vertical bar to the receiver stanchion.

8. The cockpit barrier system of claim 7, wherein the secondary cockpit barrier further comprises:
a plurality of guide holes (220) formed in the receiver stanchion; and
a plurality of latch guides (222) extending from a surface of the vertical bar, each of the plurality of latch guides configured to engage a guide hole of the plurality of guide holes.

9. The cockpit barrier system of claim 7 or 8, wherein the barrier includes at least one of a wire, a synthetic cord, or an aramid fiber woven into a semi-transparent mesh.

10. The cockpit barrier system of claim 7, 8 or 9, wherein the internal roller bar is configured to rotate in a first direction to extend the barrier and to rotate in a second direction opposite the first direction to retract the barrier, and optionally wherein the secondary cockpit barrier further comprises:
an internal spring coupled to the internal roller bar and configured to apply a force to rotate the internal roller bar in the second direction.

11. The cockpit barrier system of any of claims 7 to 10, wherein the cylindrical cartridge is coupled to an exterior surface of a wall of the first monument and wherein the receiver stanchion is coupled to an exterior surface of a wall of the second monument, or wherein the cylindrical cartridge is integral with the first monument and the receiver stanchion is integral with the second monument.

12. The cockpit barrier system of any of claims 7 to 11, wherein the secondary cockpit barrier further comprises:
an isolator mount disposed between the cylindrical cartridge and the first monument.

13. An aircraft monument, comprising:
a first wall;
a cylindrical cartridge (202) coupled to the first wall, the cylindrical cartridge having an outer wall and an interior compartment;
an internal roller bar disposed in the interior compartment of the cylindrical cartridge;
a receiver stanchion (208);
a vertical bar (206) configured to engage the receiver stanchion;
a barrier (204) having a first edge coupled to the internal roller bar and a second edge coupled to the vertical bar, the barrier configured to extend from the cylindrical cartridge to the receiver stanchion; and
a lock (210) coupled to the receiver stanchion and configured to secure the vertical bar to the receiver stanchion.

14. The aircraft monument of claim 13, wherein the cylindrical cartridge is integral with the first wall, or wherein the cylindrical cartridge is coupled to an exterior surface of the first wall.

15. The aircraft monument of claim 13 or 14, wherein the barrier includes at least one of a wire, a synthetic cord, or an aramid fiber woven into a semi-transparent mesh and/or wherein the internal roller bar is configured to rotate in a first direction to extend the barrier and to rotate in a second direction opposite the first direction to retract the barrier, and optionally further comprising:
an internal spring coupled to the internal roller bar and configured to apply a force to rotate the internal roller bar in the second direction.
